# EUROPÄISCHE PATENTSCHRIFT

(11) **EP 1 820 978 B1**
(45) Veröffentlichungstag und Bekanntmachung des Hinweises auf die Patenterteilung: **07.04.2010**
(21) Anmeldenummer: 06450157.0
(22) Anmeldetag: 30.10.2006
(51) Int. Cl.: F16B 25/00, F16B 33/02

(54) **Schraube zur Verwendung bei verformbaren Werkstoffen, wie Holz, Verbundwerkstoffen, Kunststoffen u. dgl.**
Screw for use with deformable materials, like wood, composite materials, plastics etc.
vis à utiliser avec des matériaux déformables comme le bois, les matériaux composites, les matières plastiques, etc

(30) Priorität: 16.02.2006 AT 2462006
(43) Veröffentlichungstag der Anmeldung: 22.08.2007
(73) Patentinhaber: Schmid Schrauben Hainfeld Gesellschaft m.b.H., 3170 Hainfeld (AT)
(72) Erfinder: Pinczker, Erich, 3170 Hainfeld (AT)
(74) Vertreter: Atzwanger, Richard

(56) Entgegenhaltungen:
- WO-A-2005/103511
- DE-A1-102004 018 069
- FR-A1- 2 669 062
- GB-A- 1 209 225

## Beschreibung

Die gegenständliche Erfindung betrifft eine selbstbohrende Schraube zur Verwendung bei verformbaren Werkstoffen, wie Holz, Verbundwerkstoffen, Kunststoffen u.dgl., mit einem Schaft, welcher an einem seiner beiden Enden mit einer kegeligen Spitze und am anderen Ende mit einem Kopf ausgebildet ist, wobei der Schaft über zumindest einen Teil seiner Länge mit einem Schraubengewinde ausgebildet ist, dessen Gewindegänge im Querschnitt angenähert dreieckig ausgebildet sind. Eine solche Schraube ist aus der DE102004018069 Al bekannt.

Die WO 2005/103511 A1 offenbart eine Befestigungseinrichtung bestehend aus einem ersten Bauteil in Form eines mit einem Gewinde ausgebildeten Schraubbolzens und aus einem zweiten Bauteil, welcher mit einer mit einem Gewinde versehenen Bohrung ausgebildet ist, wobei der zweite Bauteil aus einem nicht verformbaren Material hergestellt ist. Dieser bekannten Befestigungseinrichtung liegt die Aufgabe zugrunde, den Schraubbolzen so auszubilden, dass er nach seinem Einschrauben in die mit dem Gewinde versehene Bohrung innerhalb dieser abgedichtet wird und dass er weiters in dieser verriegelt wird. Diese Wirkungen werden dadurch erzielt, dass einige der Gewindegänge des Schraubbolzens wellenförmig ausgebildet sind, wodurch diese an die Gewindegänge der Bohrung zur dichten Anlage kommen und wodurch weiters aufgrund der hierdurch bewirkten Reibung der Schraubbolzen innerhalb der Bohrung verriegelt wird.

Dieser bekannte Schraubbolzen ist dabei weder mit einer kegeligen Spitze ausgebildet, noch ist er dafür vorgesehen, in einen verformbaren Bauteil eingeschraubt zu werden, ohne dass dieser mit einer Bohrung ausgebildet ist.

Demgegenüber betrifft die gegenständliche Erfindung eine selbstbohrende Schraube, welche dazu dient, in einen verformbaren Bauteil eingeschraubt zu werden, wobei dieser Bauteil nicht vorgebohrt ist. Da vielmehr die Schraube selbstbohrend ist, muss sie mit einer kegeligen Spitze ausgebildet sein.

Derartige Schrauben sind aus dem Stand der Technik bekannt. Der gegenständlichen Erfindung liegt dabei die Aufgabe zugrunde, eine derartige Schraube so auszubilden, dass der Einschraubwiderstand im Vergleich zu bekannten Schrauben vermindert wird. Dies wird erfindungsgemäß dadurch erzielt, dass an die kegelige Spitze anliegende Gewindegänge bei konstantem Querschnitt mit einem wellenförmigen Verlauf ausgebildet sind. Durch den wellenförmigen Verlauf von an die kegelige Spitze anliegenden Gewindegängen erfolgt eine Verformung desjenigen Materials, in welches die Schraube eingeschraubt wird dahingehend, dass der Einschraubwiderstand für die folgenden Gewindegänge stark herabgesetzt wird. Hierdurch wird der Einschraubwiderstand der Schraube maßgeblich vermindert, wodurch der Arbeitsablauf vereinfacht wird. Da sich jedoch nach dem Einschrauben der Schraube das Material zurückverformt, kommt hierdurch auch der erfindungsgemäßen Schraube eine sehr große Auszugsfestigkeit zu.

Vorzugsweise sind die gewellten Gewindegänge mit 6 bis 15 Wellen ausgebildet. Weiters kann die Amplitude der Wellen 1% bis 10% der Höhe eines Gewindeganges betragen. Weiters sind vorzugsweise weiters einige Gewindegänge an ihren äußeren Kanten mit Einkerbungen ausgebildet. Zudem ist vorzugsweise der an den Schraubenkopf anschließende Schafteil ohne Gewindegänge ausgebildet und ist der daran anschließende Schaftteil mit radial abragenden, sich angenähert unter 45° zur Längsrichtung der Schraube erstreckenden Rippen ausgebildet. Weiters ist vorzugsweise der Schraubenkopf an der dem Schaft zugewandten Seite konisch ausgebildet und ist die Konusfläche mit radial abragenden Rippen ausgebildet.

Nach einem weiteren vorzugsweisen Merkmal ist der Schraubenkopf an seiner freien Seite mit einer Ausnehmung für das Einsetzen eines Drehwerkzeuges ausgebildet. Weiters kann die Schraubenspitze in Längsrichtung der Schraube als Teilstück, insbesondere als Hälfte eines Kegels, ausgebildet sein.

Der Gegenstand der Erfindung ist nachstehend anhand von zwei in der Zeichnung dargestellten Ausführungsbeispielen näher erläutert. Es zeigen:
- Fig. 1: ein erstes Ausführungsbeispiel einer erfindungsgemäßen Schraube, in Vorderansicht;
- Fig.2: die Schraube gemäß Fig.1, in vergrößerter, abgebrochener Darstellung;
- Fig.3, Fig.3a: Details der Schraube gemäß Fig.2, in vergrößerter Darstellung und in Ansicht bzw. in Draufsicht;
- Fig.3b: das Detail A der Fig.2, in vergrößerter Darstellung und im Schnitt;
- Fig.4: den Schraubenkopf gemäß Fig.1, in Ansicht und im Schnitt sowie in vergrößerter Darstellung, und
- Fig.5: ein zweites Ausführungsbeispiel einer erfindungsgemäßen Schraube, in Vorderansicht.

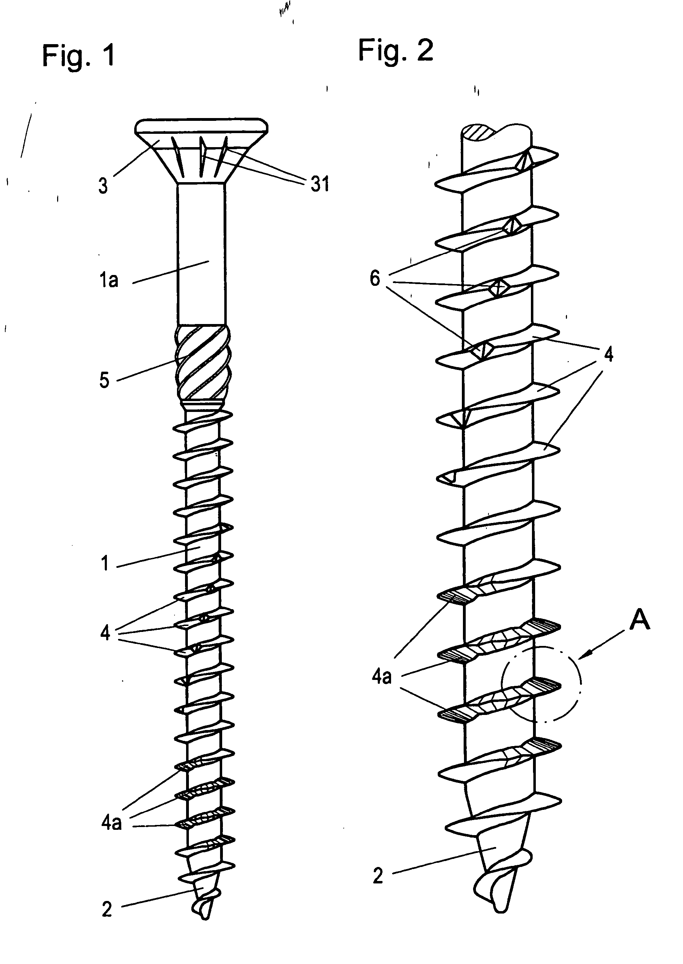

Die in Fig. 1 dargestellte Schraube besteht aus einem Schraubenschaft 1, welcher an seinem unteren Ende mit einer kegeligen Schraubenspitze 2 und an seinem oberen Ende mit einem Schraubenkopf 3 ausgebildet ist. Weiters ist der Schraubenschaft 1 von der Schraubenspitze 2 weg mit Gewindegängen 4 ausgebildet, welche sich etwa über zwei Drittel der Länge des Schraubenschaftes 1 erstrecken. Anschließend an diese Gewindegänge 4 ist ein gewindefreier Teil 1a des Schraubenschaftes 1 über einen Teil seiner Länge mit schraubenlinienförmig verlaufenden Rippen 5 ausgebildet, wobei die Hüllfläche dieser Rippen 5 etwas geringer ist als die Hüllfläche der Gewindegänge 4. Die Neigung dieser Rippen 5 zur Längsachse der Schraube beträgt etwa 45°. Alternativ dazu können sich die Gewindegänge 4 bis zum Schraubenkopf 3 erstrecken. Zudem ist die dem Schraubenschaft 1a zugewandte Fläche des Schraubenkopfes 3, welcher sich vom Schraubenschaft 1a weg konisch erweitert, mit radial abragenden Rippen 31 ausgebildet.

Die zwischen den Gewindegängen 4 und dem Schraubenkopf 3 vorgesehenen Rippen 5 dienen dazu, das Bohrloch, in welches diese Schraube eingeschraubt wird, aufzuweiten, wodurch beim Eindrehen der Schraube die Reibung zwischen dem an den Schraubenkopf 3 anschließenden Schaftteil 1a und dem Bohrloch herabgesetzt wird.

Bei bekannten Schrauben verlaufen die Gewindegänge, welche im Querschnitt angenähert dreieckig ausgebildet sind, längs einer Wendellinie, deren Steigung über den gesamten Verlauf des Schraubengewindes einen konstanten Wert von etwa 5° bis 13 aufweist.

Die in Fig. dargestellten, vom Schraubenkopf 3 radial abragenden Rippen 31 weisen eine Höhe von etwa 5% bis 15% des Durchmessers des Schraubenschaftes 1a auf. Dabei sind z.B. sechs bis acht im gleichen Abstand voneinander befindliche Rippen 31 vorgesehen. Es können jedoch auch bis zu 24 Rippen 31 vorgesehen sein. Der Zweck dieser Rippen 31 besteht darin, beim Eindrehen der Schraube etwas Material abzutragen, um den Schraubenkopf 3 leichter in das Material eindrehen zu können.

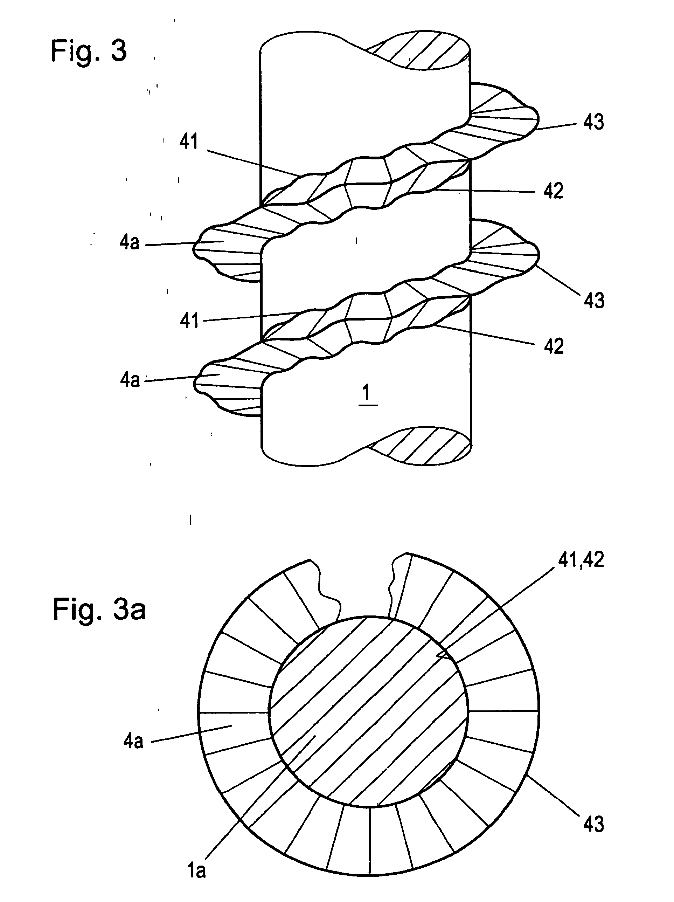

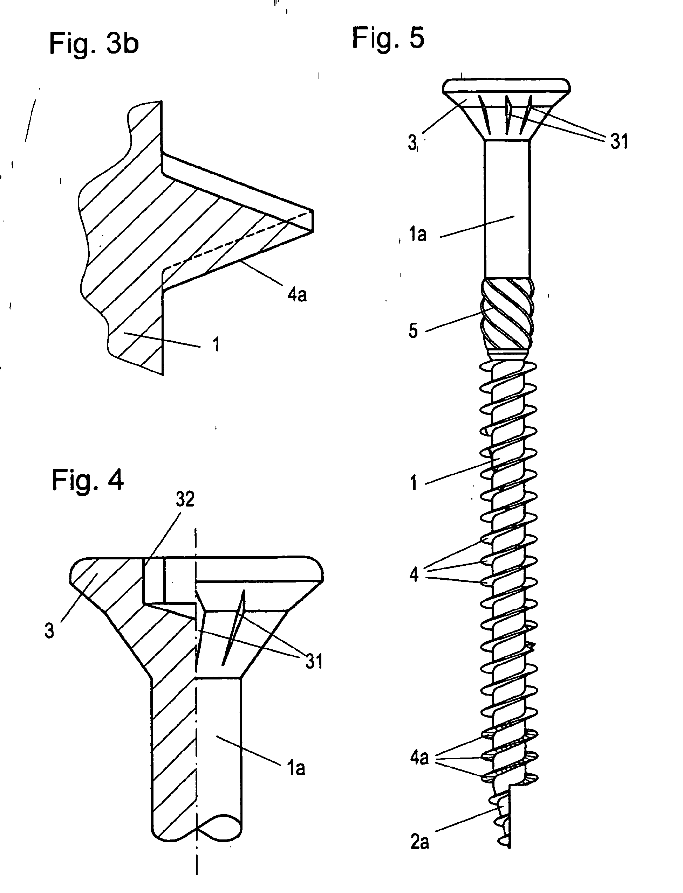

Wie dies nachstehend anhand der Fig.2. sowie Fig.3, 3a und 3b erläutert ist, weisen bei einer erfindungsgemäßen Schraube die Gewindegänge 4 gleichfalls einen gleichbleibenden, angenähert dreieckigen Querschnitt auf, wobei die Flanken der Gewindegänge 4 miteinander einen Winkel von 20° bis 50° einschließen. Dabei sind jedoch einige Gewindegänge 4a wellenförmig ausgebildet, sodass sich deren Steigung über den Verlauf dieser Gewindegänge periodisch ändert. Dabei verlaufen die beiden Basislinien 41 und 42 der Gewindegänge 4a am Schraubenschaft 1 ebenso wie die äußere Kante 43 der Gewindegänge 4a rings um den Schraubenschaft 1 längs wellenförmiger Linien. Die Steigungen können in Bezug auf die Einschraubrichtung immer positive Werte oder mehrheitlich positive Werte und dazwischen negative Werte aufweisen.

Längs eines Gewindeganges 4a können 6 bis 15 Wellen vorgesehen sein, deren Amplituden 1 % bis 10% der Höhe eines Gewindeganges 4a betragen.

Der Sinn dieser Ausbildung einiger der anschließend an die Schraubenspitze 2 vorgesehenen gewellten Gewindegänge 4a besteht darin, das an diese Gewindegänge 4a anliegende Material, in welches diese Schraube eingedreht wird, zu verformen und dadurch zu verdichten. Hierdurch wird einerseits der Einschraubwiderstand der Schraube vermindert und werden andererseits deren Auszugsfestigkeit und das Überdrehmoment vergrößert. Hierdurch kommen derartigen Schrauben gegenüber bekannten Schrauben verbesserte Eigenschaften zu.

Wie dies weiters aus Fig.2 ersichtlich ist, sind einige der Gewindegänge 4 mit mindestens einer in der äußeren Kante 43 befindlichen Einkerbung 6 versehen. Diese Einkerbungen 6 dienen dazu, beim Eindrehen der Schraube etwas Material abzutragen, wodurch gleichfalls der Eindrehwiderstand der Schraube herabgesetzt wird.
Wie dies weiters aus Fig. 4 ersichtlich ist, ist der Schraubenkopf 3 mit einer von seiner Oberseite ausgehenden Ausnehmung 32 ausgebildet, in welche ein Drehwerkzeug einsetzbar ist.

In Fig.5 ist eine zweite Ausführungsform einer erfindungsgemäßen Schraube dargestellt, welche sich von der Schraube gemäß Fig. 1 dadurch unterscheidet, dass die kegelige Spitze 2a als halber Kegel ausgebildet ist. Durch diese Ausbildung wird durch die Spitze der Schraube Material abgetragen, wodurch die Sprengwirkung der Schraube herabgesetzt wird.
Zudem ist diese Schraube mit einem Doppelgewinde ausgebildet, dessen Steigung 12° bis 20° beträgt.

Eine erfindungsgemäße Schraube ist zur Verwendung bei steifelastischen und teilweise plastisch verformbaren Materialien, wie Holz, Holzwerkstoffen, Verbundwerkstoffen, Kunststoffen u.dgl. vorgesehen. Eine erfindungsgemäße Schraube ist gegenüber bekannten Schrauben deshalb vorteilhaft, da sie einen verminderten Einschraubwiderstand, eine erhöhte Auszugsfestigkeit und ein vergrößertes Überdrehmoment aufweist.

Nachstehend sind die Maße eines Ausführungsbeispieles einer anmeldungsgemäßen Schraube angegeben. Es handelt sich dabei um eine Schraube mit einem Doppelganggewinde entsprechend der Schraube gemäß Fig. 5:

| | |
|---|---|
| Länge der Schraube: | 100 mm |
| Länge des Schraubengewindes: | 54 mm |
| Länge des gewindefreien Schaftes: | 23 mm |
| Durchmesser des gewindefreien Schaftes 1a: | 4,2 mm |
| Länge des mit Rippen 5 versehenen Schaftteiles: | 10 mm |
| Länge der Halbspitze 2a: | 8 mm |
| Steigung der Gewindegänge 4: | 5 mm |
| Anzahl der Gewindegänge 4: | 11 |
| Anzahl der gewellten Gewindegänge 4a: | 3 |
| Anzahl der Wellen pro Gewindegang 4a: | 11 |
| Größe der Amplitude: | 0,3 mm |
| bezogen auf die Steigung von 5 mm: | 6% |

## Patentansprüche

1. Selbstbohrende Schraube zur Verwendung bei verformbaren Werkstoffen, wie Holz, Verbundwerkstoffen, Kunststoffen u.dgl., mit einem Schaft (1), welcher an einem Ende mit einer kegeligen Spitze (2) und am anderen Ende mit einem Kopf (3) ausgebildet ist, wobei der Schaft (1) über zumindest einen Teil seiner Länge mit einem Schraubengewinde ausgebildet ist, dessen Gewindegänge (4) im Querschnitt angenähert dreieckig ausgebildet sind, **dadurch gekennzeichnet, dass** an die kegelige Spitze anliegende Gewindegänge (4a) in Drehrichtung der Schraube bei konstantem Querschnitt mit einem wellenförmigen Verlauf ausgebildet sind.

2. Schraube nach Patentanspruch 1, **dadurch gekennzeichnet, dass** die gewellten Gewindegänge (4a) pro Gewindegang mit 6 bis 15 Wellen ausgebildet sind.

3. Schraube nach einem der Patentansprüche 1 und 2, **dadurch gekennzeichnet, dass** die Amplitude der Wellen 1% bis 10% der Höhe eines Gewindeganges (4a) beträgt.

4. Schraube nach einem der Patentansprüche 1 bis 3, **dadurch gekennzeichnet, dass** einige Gewindegänge (4) an ihren äußeren Kanten mit Einkerbungen (6) ausgebildet sind.

5. Schraube nach einem der Patentansprüche 1 bis 4, **dadurch gekennzeichnet, dass** der an den Kopf (3) der Schraube anschließende Schaftteil (1a) ohne Gewindegänge ausgebildet ist und dass der daran anschließende Schaftteil mit radial abragenden, sich angenähert unter 45° zur Längsrichtung der Schraube erstreckenden Rippen (5) ausgebildet ist.

6. Schraube nach einem der Patentansprüche 1 bis 5, **dadurch gekennzeichnet, dass** der Schraubenkopf (3) an der dem Schaft (1) zugewandten Seite konisch ausgebildet ist und die Konusfläche mit radial abragenden Rippen (31) ausgebildet ist.

7. Schraube nach einem der Patentansprüche 1 bis 6, **dadurch gekennzeichnet, dass** der Schraubenkopf (3) an seiner freien Seite mit einer Ausnehmung (32) für das Einsetzen eines Drehwerkzeuges ausgebildet ist.

8. Schraube nach einem der Patentansprüche 1 bis 7, **dadurch gekennzeichnet, dass** die Schraubenspitze (2a) in Längsrichtung der Schraube als Teilstück, insbesondere als Hälfte eines Kegels, ausgebildet ist.

## Claims

1. A self-tapping screw for use in deformable materials, such as wood, composite materials, plastics and the like, having a shank (1), which is provided at one end with a conical tip (2) and at the other end with a head (3), the shank (1) being provided over at least part of its length with a screw thread, the thread turns (4) being approximately triangular in cross-section, **characterised in that** thread turns (4a) adjacent the conical tip are provided in the direction of rotation of the screw with an undulating profile, their cross-section remaining constant.

2. A screw according to claim 1, **characterised in that** the undulating thread turns (4a) are provided with 6 to 15 undulations per thread turn.

3. A screw according to either one of claims 1 and 2, **characterised in that** the amplitude of the undulations amounts to 1% to 10% of the height of a thread turn (4a).

4. A screw according to any one of claims 1 to 3, **characterised in that** some of the thread turns (4) are provided at their outer edges with notches (6).

5. A screw according to any one of claims 1 to 4, **characterised in that** the shank part (1a) following the head (3) of the screw is configured without thread turns and **in that** the shank part following thereon is configured with radially projecting ribs (5) extending at approximately 45° to the longitudinal direction of the screw.

6. A screw according to any one of claims 1 to 5, **characterised in that** the screw head (3) is conical on the side facing the shank (1) and the conical surface is provided with radially projecting ribs (31).

7. A screw according to any one of claims 1 to 6, **characterised in that** the screw head (3) is provided on its free side with a recess (32) for insertion of a screwdriver.

8. A screw according to any one of claims 1 to 7, **characterised in that** the screw tip (2a) is configured in the longitudinal direction of the screw as a portion, in particular as a half, of a cone.

## Revendications

1. Vis autotaraudeuse à utiliser avec des matériaux déformables comme le bois, les matériaux composites, les matières plastiques, etc., avec une tige (1) qui présente à une extrémité une pointe conique (2) et à l'autre extrémité une tête (3), la tige (1) présentant sur une partie au moins de sa longueur un filetage dont les spires (4) ont une section transversale approximativement triangulaire, **caractérisée en ce que** les spires (4a) voisines de la pointe conique présentent dans le sens de rotation de la vis, pour une section transversale constante, une forme ondulée.

2. Vis selon la revendication 1, **caractérisée en ce que** les spires ondulées (4a) présentent 6 à 15 ondulations par spire.

3. Vis selon l'une des revendications 1 et 2, **caractérisée en ce que** l'amplitude des ondulations représente 1% à 10% de la hauteur d'une spire (4a).

4. Vis selon l'une des revendications 1 à 3, **caractérisée en ce que** quelques spires (4) présentent sur leurs bords extérieurs des encoches (6).

5. Vis selon l'une des revendications 1 à 4, **caractérisée en ce que** la partie de tige (1a) qui fait suite à la tête (3) de la vis ne présente pas de spires et **en ce que** la partie de tige qui fait suite à ladite partie (1a) présente des nervures (5) qui dépassent radialement et qui s'étendent approximativement à 45° par rapport au sens longitudinal de la vis.

6. Vis selon l'une des revendications 1 à 5, **caractérisée en ce que** la tête de vis (3) a une forme conique sur son côté tourné vers la tige (1), et la surface conique présente des nervures (31) qui dépassent radialement.

7. Vis selon l'une des revendications 1 à 6, **caractérisée en ce que** la tête de vis (3) présente sur son côté libre un creux (32) pour l'introduction d'un outil de vissage.

8. Vis selon l'une des revendications 1 à 7, **caractérisée en ce que** la pointe de vis (2a) est conçue dans le sens longitudinal de la vis comme une pièce partielle, en particulier comme la moitié d'un cône.
